# EUROPÄISCHE PATENTSCHRIFT

(11) **EP 2 386 433 B1**
(45) Veröffentlichungstag und Bekanntmachung des Hinweises auf die Patenterteilung: **21.03.2012**
(21) Anmeldenummer: 11156608.9
(22) Anmeldetag: 02.03.2011
(51) Int. Cl.: B60G 11/113, B62D 17/00, B60G 11/34

(54) **Achsanordnung**
Axle assembly
Agencement d'axe

(30) Priorität: 11.05.2010 DE 102010020234; 12.05.2010 DE 102010020428
(43) Veröffentlichungstag der Anmeldung: 16.11.2011
(73) Patentinhaber: Benteler Automobiltechnik GmbH, 33102 Paderborn (DE)
(72) Erfinder: Henksmeier, Thomas, 59329, Wadersloh (DE); Hochapfel, Erik, 34281, Gudensberg (DE)
(74) Vertreter: Griepenstroh, Jörg

(56) Entgegenhaltungen:
- DE-A1- 19 934 739
- GB-A- 2 349 856
- GB-A- 191 109 909
- US-A- 2 745 661
- US-A- 3 194 580
- US-A- 3 730 508
- US-A- 5 401 054
- US-A- 5 634 656
- US-A1- 2009 000 431
- US-A1- 2009 189 364

## Beschreibung

Die vorliegende Erfindung betrifft eine Achsanordnung, vorzugsweise Starrachsanordnung, gemäß dem Oberbegriff des Patentanspruchs 1.

Aus dem Stand der Technik bekannte Kraftfahrzeug-Radaufhängungen bestehen unter anderem aus den Anbindungspunkten an die Kraftfahrzeugkarosserie, Lagern, mindestens einem Lenker, einem Federungssystem und einem an dem Lenker befestigten Radträger. Bevorzugt sind die Lenker als Querlenker oder Schräglenker ausgebildet. Im Falle einer Starrachse kommen oft Federn in Form von Blattfedern zum Einsatz.

Starrachsen bestehen üblicherweise aus starren Achsrohren, welche über ein Befestigungssystem, sogenannte Blattfederanbindungen, an die radführenden Längsblattfedern gekoppelt sind. Diese Längsblattfedern können aus Stahl oder aber auch aus Verbundwerkstoffen wie GFK oder CFK hergestellt sein. Die Blattfedern selbst werden mit der Karosserie gekoppelt.

Eine Positionierung der Starrachskörper zu den Blattfedern erfolgt meist über einen sogenannten Herzbolzen an der Feder, der in eine Bohrung an der unteren Blattfederanbindung einrastet. Die Starrachse selbst besteht aus dem Achsrohr und den äußeren Radträgern, die mit dem Achsrohr fest verbunden sind. Diese feste Verbindung besteht meistens aus einer schweiß- oder aber schraubtechnischen Lösung.

Im Produktionsprozess, während der Erstmontage oder aber auch durch den Betrieb eines Kraftfahrzeuges mit einer Starrachse befinden sich die Radstellungen nicht immer in optimal vorbestimmten Positionen. Rohbautoleranzen führen gegebenenfalls dazu, dass die starren Achsen nicht in einem orthogonalen Winkel zur Fahrzeuglängsachse stehen und somit auch zu den üblicherweise einstellbaren Achsen mit Einzelradaufhängung, meist Vorderachsen, schief sind.

Dies führt dann dazu, dass die Vorderachse gegebenenfalls entgegen der Schrägstellung der hinteren Achse eingestellt werden muss, damit eine Geradeausfahrt des Fahrzeugs garantiert ist. Die zur Fahrzeuglängsachse schräg stehenden Reifen führen zu einem erhöhten Reifenverschleiß, was möglicherweise an allen vier Rädern eines Kraftfahrzeugs auftreten kann. Ebenfalls führt eine falsch eingestellte Radstellung, insbesondere eine falsch eingestellte Spur, zu erhöhtem Kraftstoffverbrauch.

Auch können falsch eingestellte Räder nur geringere Seitenführungskräfte übertragen, was zu einer Reduzierung der Sicherheitsreserven in einem Grenzbereich führen kann. Gerade an der Hinterachse besteht hier erhöhter Sicherheitsbedarf, da gegebenenfalls ein Übersteuern in Folge eines ausbrechenden Hecks zu einem unkontrollierbaren Fahrzustand führt.

Beispielsweise ist aus der US 2,745,661 A eine Starrachsanordnung bekannt, bei der ein Achskörper an einem Blattfederpaket mittels U-Bolzen gekoppelt ist. Zur Spureinstellung sind gegenüberliegende Einstellschrauben an einer unter dem Blattfederpakete angeordneten Justierfläche vorgesehen, wobei durch Drehung der Justierschrauben eine Einstellung der Spur erfolgt. Eine solche Spureinstellung ist insbesondere in den Instandhaltungen und Wartungen eines Kraftfahrzeuges aufwendig einzustellen und anfällig gegenüber Verschmutzungen und/oder Korrosionen.

Aus der US 3,194,580 A ist eine ähnliche Achsanordnung bekannt, bei der zur Lagefixierung eines Achskörpers gegenüber einem Blattfederpaket zwei gegenüberliegende sägezahnähnliche Oberflächen angeordnet sind, die eine formschlüssige Koppelung herstellen. Zur Einstellung der Spur ist es notwendig, das Kraftfahrzeug aufzubocken, so dass keine statische Radlast auf der Achse liegt. Eine Spureinstellung erfordert ein deutliches Lösen der U-Bolzen und ein Verschieben der sägezahnähnlichen Oberflächen gegeneinander. Eine Spurkorrektur ist mit einer solchen Spureinstellungsmöglichkeit nur sehr aufwendig und nur bei von der statischen Radlast befreiter Achse durchführbar.

Weiterhin sind aus der US 2009/189364 A1, der US 5,401,054 A und US 5,634,656 A Achsanordnungen mit Spureinstellungsmöglichkeiten bekannt. Alle Spureinstellungsmöglichkeiten sind jedoch aufwendig und kostenintensiv produzierbar und/oder anfällig gegenüber Verschmutzungen und/oder Korrosionen.

Aufgabe der vorliegenden Erfindung ist es daher, eine Achsanordnung zur Verfügung zu stellen, die kostengünstig produzierbar und fehlerunanfällig ist und bei der die Spur einstellbar ist.

Die zuvor genannte Aufgabe wird erfindungsgemäß mit einer Achsanordnung gemäß Patentanspruch 1 gelöst.

Vorteilhafte Weiterbildung der vorliegenden Erfindung sind Bestandteile der abhängigen Patentansprüche.

Die erfindungsgemäße Achsanordnung, vorzugsweise Starrachsanordnung, aufweisend einen Achskörper, eine Blattfeder, eine Blattfederhalterung, wobei der Achskörper mit der Blattfeder gekoppelt ist, ist dadurch gekennzeichnet, dass in einem Koppelungsbereich der Blattfederhalterung ein Einstellmittel zur Spureinstellung des Achskörpers vorhanden ist.

Hierdurch ergibt sich insbesondere der Vorteil, dass bei einer Blattfederstarrachse die Spur der Achse bei der Erstmontage einstellbar ist. Weiterhin kann die Spur der Achse während eines Servicebesuchs in der Werkstatt nachjustiert werden. Insbesondere ergibt sich mit der erfindungsgemäßen Achsanordnung der Vorteil, dass auch auf bereits bestehende Achsanordnungen, vorzugsweise Starrachsanordnungen zurückgegriffen werden kann, die auch eine Antriebsfunktion inne haben. Im Rahmen der Erfindung ist es möglich, den gesamten Achskörper so zu verstellen, dass die Spur des Kraftfahrzeuges korrekt eingestellt ist, ohne den Antriebstrang zu verspannen.

Folglich kann auch eine angetriebene Achse mit bereits vorhandener Antriebstechnik durch Modifikation mit der erfindungsgemäßen Achsanordnung und der daraus resultierenden Möglichkeit der Spureinstellung ausgerüstet werden. Hierbei ist es besonders vorteilig, dass die erfindungsgemäße Achsanordnung auf bereits vorhandene Serienbauteile von angetriebenen Starachsen zurückgreifen kann, die wiederum dahingehend modifizierbar sind, in der Spur einstellbar zu sein. Erfindungsgemäß können somit bereits vorhandene Achsanordnungen nach-, um-oder ausgerüstet werden, um in der Spur einstellbar zu sein.

Die Erfindung bietet insbesondere den Vorteil, dass bei angetriebenen Achsen keine zusätzlichen Ausgleichswellen oder Gelenke im Bereich der Radlager angeordnet werden müssen, sondern die Starrachsanordnung so übernommen werden kann, da durch Verschwenken des gesamten Achskörpers eine Positionierung bzw. ein Spannungsabbau im Antriebstrang durch ein Kardangelenk, das bereits an einem vorhandenen Verteilergetriebe angeordnet ist, erfolgt. Gerade unter kostengünstigen Aspekten ist eine erfindungsgemäße Achsanordnung damit besonders vorteilhaft zur Einstellung einer Spur eines Kraftfahrzeuges ausgestattet, ohne eine gänzliche Neukonstruktion einer bereits vorhandenen Technik hervorzurufen.

Eine richtig eingestellte Spur führt zu einem geringeren Reifenverschleiß, geringerem Kraftstoffverbrauch und erhöhter Sicherheit in Grenzsituationen durch erhöhte Seitenfügungskraftreserven aufgrund der für das Fahrzeug vorgegebenen korrekten Ermittlung der Spur.

Das Einstellmittel ist dabei durch eine Exzenterschraube und eine dem Einstellmittel zugeordneten Gegenlagerfläche ausgebildet. Eine Exzenterschraube ist im Rahmen der Erfindung eine Schraube, bei der zwei Abschnitte eine Exzentrizität zueinander aufweisen. Durch eine Drehbewegung werden die über die Exzenterschraube verbundenen Bauteile relativ zueinander verlagert. Hierzu benötigt die Exzenterschraube Gegenlagerflächen. Diese Gegenlagerflächen sowie die Exzenterschraube sind Bestandteil des Einstellmittels und somit auch innerhalb der Achsanordnung, vorzugsweise an der Blattfederhalterung, angeordnet oder aber dieser zugeordnet.

In einer weiteren besonders bevorzugten Ausführungsform weist die Exzenterschraube eine zylindrische Anlagefläche und eine zu der Längsachse der Anlagenfläche exzentrisch versetzt zylindrische Justierfläche auf. Die Exzenterschraube ist im Rahmen der Erfindung ein Bolzenbauteil, das beispielsweise gießtechnisch oder aber durch spanabhebende Verfahren herstellbar ist.

Die Exzenterschraube besitzt im Wesentlichen zwei zylinderförmige Abschnitte, wobei ein zylinderförmiger Abschnitt eine Anlagefläche und ein anderer zylinderförmiger Abschnitt, eine hierzu exzentrisch versetzte Justierfläche aufweist. Die Anlagefläche und auch die Justierfläche können die gleichen Durchmesser aufweisen oder aber auch voneinander verschiedene Durchmesser. Vorzugsweise weist die Justierfläche einen größeren Durchmesser auf, als die Anlagefläche. Die jeweiligen Längsachsen der zylindrischen Abschnitte sind mit der Exzentrizität E zueinander versetzt. Durch eine Drehbewegung um die Längsachse der Anlagefläche verschiebt sich somit die Längsachse der Justierfläche kreisförmig um die Längsachse der Anlagefläche, was zu einer Relativbewegung der über die Gegenlager angesteuerten Bauteile führt.

Vorzugsweise weist die Blattfederhalterung eine erste Komponente und eine zweite Komponente auf und die erste Komponente und die zweite Komponente sind schellenartig zusammenwirkend ausgebildet. Durch die zweikomponentige Montageweise der Blattfederhalterung ist eine besonders einfache Montage möglich. Die schellenartig zusammenwirkende erste und zweite Komponente umgreifen die Blattfeder. Hierdurch wird eine kraftschlüssige und/oder formschlüssige Anbindung der Blattfederhalterung an die Blattfeder sichergestellt. Die zweite Komponente ist dabei besonders bevorzugt so ausgebildet, dass sie an dem Achskörper stoffschlüssig angebunden ist. Sie kann aber auch den Achskörper umgreifen, so dass im Eingriff mit der ersten Komponente hier auch ein schellenartiges Zusammenwirken stattfindet. Sowohl der Achskörper als auch die Blattfeder sind dann kraftschlüssig und/oder formschlüssig durch die erste und zweite Komponente miteinander gekoppelt.

In einer weiteren bevorzugten Ausführungsvariante weist die erste Komponente zwei die Blattfeder übergreifende Schenkel auf, die mit einem Querjoch verbunden sind. Die erste Komponente ist somit bevorzugt als Guss- oder aber Fräsbauteil ausgebildet und besonders unter gewichtsoptimierenden Aspekten bei gleichzeitig hoher Festigkeit ausgebildet. An den jeweiligen Enden der Schenkel sind Montagemittel vorgesehen, um die Blattfeder übergreifenden Schenkel mit der zweiten Komponente zu koppeln.

In einer bevorzugten Ausführungsvariante weist die erste Komponente eine zylindrische Montageöffnung auf, in die die Anlagefläche drehbar eingesetzt ist. Bei der Montageöffnung handelt es sich dabei im Rahmen der Erfindung um eine Durchgangsbohrung, deren Innendurchmesser im Wesentlichen dem Außendurchmesser der zylindrischen Anlagefläche entspricht. Die zylindrische Anlagefläche soll im Rahmen der Erfindung dabei so in der Montageöffnung angeordnet sein, dass sie drehbar ist. Ein eventuelles Verschmutzen oder aber Festrosten im Betrieb des Kraftfahrzeugs sollte hier auch Berücksichtigung finden. Gegebenenfalls ist durch Anordnung eines zusätzlichen Schmierstoffes eine Drehbarkeit sicherzustellen.

Vorzugsweise ist zwischen der ersten Komponente und der Blattfeder eine Zwischenlage angeordnet, wobei die Zwischenlage eine Justieröffnung aufweist und lagefixiert mit der Blattfeder verbunden ist. Bei der Zwischenlage kann es sich dabei um eine auf die Blattfeder aufgebrachte Lage oder aber mit der Blattfeder verbundene Lage handeln. Diese kann beispielsweise aus Stahl, Kunststoff oder einem Elastomer mit Einlagen aus Stahl oder Kunststoff bestehen. Die Zwischenlage kann beispielsweise durch Kleben, Schweißen oder ähnliche Koppelungsprozesse mit der Blattfeder verbunden sein. In die Justieröffnung greift die Justierfläche der Exzenterschraube ein und hat somit eine zweite Gegenlagerfläche für die Relativbewegung zwischen Achskörper und Blattfeder.

In einer weiteren bevorzugten Ausführungsvariante ist die Justieröffnung als Langloch ausgebildet und die Justierfläche in der Justieröffnung drehbar angeordnet. Das Langloch ist im Rahmen der Erfindung dabei in die Y-Achse des Fahrzeugkoordinatensystems hin orientiert. Ein Verdrehen der Exzenterschraube sorgt dafür, dass die Blattfederhalterung und der damit gekoppelte Achskörper sich relativ in Fahrzeug X-Richtung durch Verdrehen der Exzenterschraube bewegen lässt. Um nach Erreichen der gewünschten Einstellung die Achsanordnung lage zu fixieren, werden die erste und die zweite Komponente miteinander so gekoppelt, dass sie eine kraft- und/oder formschlüssige Koppelung von Achskörper, Blattfederhalterung und Blattfeder erzeugen. Vorzugsweise erfolgt dieses durch Schraubverbindungen. Bei dem Langloch kann es sich beispielsweise aber auch im Rahmen der Erfindung um eine Nut handeln. Das heißt, das Langloch durchgreift die Zwischenlage nicht vollständig. Auch ist es im Rahmen der Erfindung vorstellbar, dass auf die Zwischenlage gänzlich verzichtet wird und das Langloch bzw. eine Nut, in die die Justierfläche eingreift, an der Feder selber ausgebildet ist. Hierzu kann die Feder beispielsweise ein Langloch in Fahrzeugquerrichtung aufweisen.

Vorzugsweise weist die Exzenterschraube eine Schlüsselansatzfläche zur Aufnahme eines Einstellwerkzeuges auf, besonders bevorzugt ist die Schlüsselansatzfläche als Vierkant, insbesondere als Sechskant ausgebildet. Im Rahmen der Erfindung wäre auch beispielsweise ein Innensechskant oder aber auch ein Torx-Werkzeug denkbar. Weiterhin kann die Exzenterschraube Dichtelemente aufweisen, die beispielsweise als O-Ringe das Eindringen von Wasser oder von Schmutzpartikeln in das Verstellsystem verhindern. Ebenfalls können auch Schmierstoffe zum Einsatz kommen, um über die Lebensdauer des Systems ein einwandfreies Drehen der Exzenterschraube sowohl in der Montageöffnung als auch in der Justieröffnung zu gewährleisten.

In einer weiteren bevorzugten Ausführungsvariante ist durch Drehen der Exzenterschraube eine Relativbewegung zwischen Achskörper und Blattfeder ausführbar. Durch Drehbewegungen des Einstellmittels wird somit der Achskörper relativ zur Blattfeder und somit auch relativ zum Kraftfahrzeug bzw. der Kraftfahrzeuglängsachse verstellt. Die Anordnung eines Einstellmittels ist dabei bevorzugt auf beiden Seiten der Kraftfahrzeugachse vorgesehen. Somit ist auch an der in Fahrtrichtung links und rechts liegenden Seite an der Anbindung an einer linken und einer rechtsliegenden Blattfeder jeweils ein Einstellmittel vorgesehen. Über an den Achskörper festgekoppelte Radnaben sind die Räder drehbar an dem Achskörper angeordnet. In Fahrzeug X- und auch in Fahrzeug Z-Richtung sind die Räder jedoch lagefixiert angeordnet. Durch Verstellen des Achskörpers stellt sich somit auch die Spur der Räder ein, die diese in Relation zu der Fahrzeuglängsachse aufweisen.

Weitere Vorteile, Merkmale, Eigenschaften und Aspekte der vorliegenden Erfindung ergeben sich aus der folgenden Beschreibung. Bevorzugte Ausführungsformen ergeben sich anhand der schematischen Zeichnungen. Diese dienen dem einfachen Verständnis der Erfindung. Es zeigen:
- Figur 1: Eine perspektivische Ansicht einer erfindungsgemäßen Achsanordnung;
- Figur 2: eine Schnittansicht durch eine erfindungsgemäße Achsanordnung und
- Figur 3: eine erfindungsgemäße Exzenterschraube.

In den Figuren werden für gleiche oder ähnliche Teile dieselben Bezugszeichen verwendet, wobei entsprechende oder vergleichbare Vorteile erreicht werden, auch wenn eine wiederholte Beschreibung aus Vereinfachungsgründen entfällt.

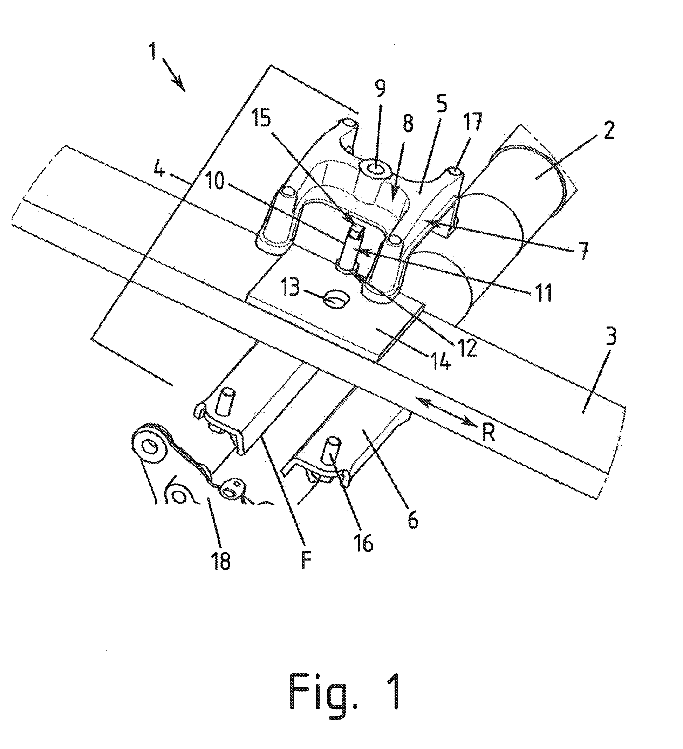

Figur 1 zeigt eine Achsanordnung 1, aufweisend einen Achskörper 2, eine Blattfeder 3 und eine Blattfederhalterung 4. Die Blattfederhalterung 4 besteht dabei aus einer ersten Komponente 5 und einer zweiten Komponente 6. Die erste Komponente 5 weist zwei sich über die Blattfeder 3 erstreckende Schenkel 7 sowie einen die Schenkel 7 verbindendes Querjoch 8 auf. Etwa mittig des Querjochs 8 befindet sich eine Montageöffnung 9 zur Aufnahme einer Exzenterschraube 10. Die Exzenterschraube 10 weist eine Anlagefläche 11 auf, die formschlüssig in die Montageöffnung 9 eingreift. Weiterhin weist die Exzenterschraube 10 eine Justierfläche 12 auf. Die Justierfläche 12 greift formschlüssig in ein Langloch 13 ein. Das Langloch 13 ist in einer Zwischenlage 14 angeordnet. Die Zwischenlage 14 ist lagefixiert auf der Blattfeder 3 angeordnet. Weiterhin weist die Exzenterschraube 10 eine Schlüsselansatzfläche 15 auf.

Die erste Komponente 5 wirkt schellenartig mit der zweiten Komponente 6 zusammen. Die zweite Komponente 6 ist in der hier gezeigten Ausführungsvariante formschlüssig über eine Fügenaht F mit dem Achskörper 2 gekoppelt. Sie weist weiterhin Befestigungsmittel 16 auf, um mit der ersten Komponente 5 gekoppelt zu werden, so dass die Blattfeder 3 und der Achskörper 2 lagefixiert miteinander verbunden sind. Die erste Komponente 5 weist Widerlager 17 zum Eingriff der Befestigungsmittel 16 auf. Am, auf die Bildseite bezogenen, unteren Ende ist an dem Achskörper 2 ein Radträger 18 angeordnet. Durch Verdrehen der Exzenterschraube 10 wird eine Relativbewegung R in Richtung der Blattfeder 3 vorgenommen.

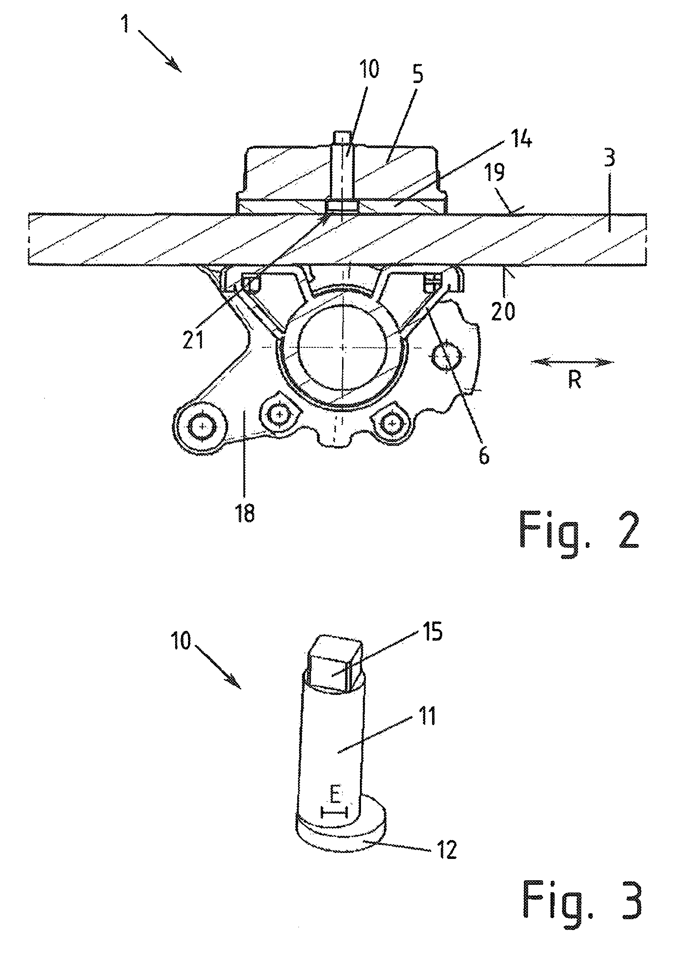

Figur 2 zeigt die gleiche Achsanordnung 1 in einer Schnittansicht. Hierbei ist zu erkennen, dass die erste Komponente 5 und die zweite Komponente 6 die Blattfeder 3 an der Oberseite 19 und an der Unterseite 20 umgreifen. Die Exzenterschraube 10 ist mit einem Spalt 21 zur Blattfeder 3 angeordnet, so dass ein relatives Verdrehen sichergestellt ist. Während der Relativbewegung R sind die Blattfeder 3 und die Zwischenlage 14 fest mit der Fahrzeugkarosserie verbunden. Die erste Komponente 5 sowie die zweite Komponente 6 und der daran gekoppelte Achskörper 2 und der mit dem Achskörper 2 lagefixierte Radträger 18 werden in Relativrichtung durch Verdrehen der Exenterschraube 10 bewegt.

Figur 3 zeigt in einer perspektivischen Detailansicht den erfindungsgemäßen Aufbau der Exzenterschraube 10. Die Exzenterschraube 10 hat dabei im Wesentlichen die Form eines Bolzens. Die Anlagefläche 11 ist zylindrisch ausgebildet und deren hier nicht dargestellte Längsachse weist einen exzentrischen Versatz E zu der ebenfalls hier nicht dargestellten Längsachse der Justierfläche 12 auf. Weiterhin ist an der Exzenterschraube 10 eine Schlüsselansatzfläche 15 ausgebildet, die hier die Form eines Vierkants aufweist.

### Bezugszeichen:

- 1 -: Achsanordnung
- 2 -: Achskörper
- 3 -: Blattfeder
- 4 -: Blattfederhalterung
- 5 -: erste Komponente
- 6 -: zweite Komponente
- 7 -: Schenkel
- 8 -: Querjoch
- 9 -: Montageöffnung
- 10 -: Exzenterschraube
- 11 -: Anlagefläche
- 12 -: Justierfläche
- 13 -: Langloch
- 14 -: Zwischenlage
- 15 -: Schlüsseiansatzfläche
- 16 -: Befestigungsmittel zu 6
- 17 -: Widerlager
- 18 -: Radträger
- 19 -: Oberseite zu 3
- 20 -: Unterseite zu 3
- 21 -: Spalt

- R -: Relativbewegung
- E -: exzentrischer Versatz
- F -: Fügenaht

## Patentansprüche

1. Achsanordnung (1), vorzugsweise Starrachsanordnung, aufweisend einen Achskörper (2), eine Blattfeder (3), eine Blattfederhalterung (4), wobei der Achskörper (2) mit der Blattfeder (3) gekoppelt ist, und wobei in einem Koppelungsbereich der Blattfederhalterung (4) ein Einstellmittel zur Spureinstellung des Achskörpers (2) vorhanden ist, **dadurch gekennzeichnet, dass** das Einstellmittel durch eine Exzenterschraube (10) und eine der Exzenterschraube (10) zugeordneten Gegenlagerfläche ausgebildet ist.

2. Achsanordnung nach Anspruch 1, **dadurch gekennzeichnet, dass** die Exzenterschraube (10) eine zylindrische Anlagefläche (11) und eine zu der Längsachse der Anlagefläche (11) exzentrisch versetze zylindrische Justierfläche (12) aufweist.

3. Achsanordnung nach einem der Ansprüche 1 bis 2, **dadurch gekennzeichnet, dass** die Blattfederhalterung (4) eine erste Komponente (5) und eine zweite Komponente (6) aufweist und dass die erste Komponente (5) und die zweite Komponente (6) schellenartig zusammenwirkend sind.

4. Achsanordnung nach Anspruch 3, **dadurch gekennzeichnet, dass** die erste Komponente (5) eine zylindrische Montageöffnung (9) aufweist, in die die Anlagefläche (11) drehbar eingesetzt ist.

5. Achsanordnung nach einem der Ansprüche 3 bis 4, **dadurch gekennzeichnet, dass** die erste Komponente (5) zwei die Blattfeder (3) übergreifende Schenkel (7) aufweist, wobei die Schenkel (7) über ein Querjoch (8) miteinander verbunden sind.

6. Achsanordnung nach einem der Ansprüche 3 bis 5, **dadurch gekennzeichnet, dass** zwischen erster Komponente (5) und Blattfeder (3) eine Zwischenlage (14) angeordnet ist, wobei die Zwischenlage (14) eine Justieröffnung aufweist und lagefixiert mit der Blattfeder (3) verbunden ist.

7. Achsanordnung nach Anspruch 6, **dadurch gekennzeichnet, dass** die Justieröffnung ein Langloch (13) ist und die Justierfläche (12) in der Justieröffnung drehbar angeordnet ist.

8. Achsanordnung nach einem der Ansprüche 2 bis 7, **dadurch gekennzeichnet, dass** die Exzenterschraube (10) einen Schlüsselansatzfläche (15) zur Aufnahme eines Einstellwerkzeuges aufweist, vorzugsweise ist die Schlüsselansatzfläche (15) als Vierkant, insbesondere als Sechskant, ausgebildet.

9. Achsanordnung nach einem der Ansprüche 2 bis 8, **dadurch gekennzeichnet, dass** durch Drehen der Exzenterschraube (10) eine Relativbewegung (R) zwischen Achskörper (2) und Blattfeder (3) ausführbar ist.

10. Achsanordnung nach Anspruch 9, **dadurch gekennzeichnet, dass** durch die Relativbewegung (R) die Spur einstellbar ist.

11. Achsanordnung nach einem der Ansprüche 4 bis 10, **dadurch gekennzeichnet, dass** die zweite Komponente (6) lagefixiert mit dem Achskörper (2) gekoppelt ist.

## Claims

1. Axle configuration (1), preferably a rigid axle configuration, having an axle body (2), a leaf spring (3), a leaf spring bracket (4), wherein the axle body (2) is connected with the leaf spring (3) and wherein, in a connection area of the leaf spring bracket (4), there is an adjustment means for the track adjustment of the axle body (2), **characterised in that** the adjustment means is formed by an eccentric screw (10) and a counterbearing surface assigned to the eccentric screw (10).

2. Axle configuration according to claim 1, **characterised in that** the eccentric screw (10) has a cylindrical contact surface (11) and a cylindrical adjustment surface (12) offset eccentrically in relation to the longitudinal axis of the contact surface (11).

3. Axle configuration according to one of the claims 1 to 2, **characterised in that** the leaf spring bracket (4) has a first component (5) and a second component (6) and that the first component (5) and the second component (6) interact like clamps.

4. Axle configuration according to claim 3, **characterised in that** the first component (5) has a cylindrical mounting opening (9) into which the contact surface (11) is rotatably inserted.

5. Axle configuration according to one of the claims 3 to 4, **characterised in that** the first component (5) has two legs (7) across the leaf spring (3), wherein the legs (7) are interconnected by means of a transverse yoke (8).

6. Axle configuration according to one of the claims 3 to 5, **characterised in that** an intermediate layer (14) is arranged between the first component (5) and leaf spring (3), wherein the intermediate layer (14) has an adjustment opening and a locationally fixed connection with the leaf spring (3).

7. Axle configuration according to claim 6, **characterised in that** the adjustment opening is an elongated hole (13) and the adjustment surface (12) is rotatably arranged in the adjustment opening.

8. Axle configuration according to one of the claims 2 to 7, **characterised in that** the eccentric screw (10) has a wrench flat (15) for an adjustment tool, the wrench flat (15) preferably being formed as a square, especially a hexagon.

9. Axle configuration according to one of the claims 2 to 8, **characterised in that** a relative movement (R) can be achieved between the axle body (2) and leaf spring (3) by rotating the eccentric screw (10).

10. Axle configuration according to claim 9, **characterised in that** the track can be adjusted by means of the relative movement (R).

11. Axle configuration according to one of the claims 4 to 10, **characterised in that** the second component (6) has a locationally fixed connection with the axle body (2).

## Revendications

1. Agencement d'essieu (1), de préférence agencement d'essieu rigide, comprenant un corps d'essieu (2), un ressort à lame (3), une monture de ressort à lame (4), dans lequel le corps d'essieu (2) est couplé au ressort à lame (3), et dans lequel un moyen de réglage est prévu dans une région de couplage de la monture de ressort à lame (4) pour le réglage de voie du corps d'essieu (2),
**caractérisé en ce que** le moyen de réglage est formé par une vis excentrique (10) et par une surface de montage antagoniste associée à la vis excentrique (10).

2. Agencement d'essieu selon la revendication 1, **caractérisé en ce que** la vis excentrique (10) comprend une surface d'application (11) cylindrique et une surface d'ajustement (12) cylindrique décalée de manière excentrique par rapport à l'axe longitudinal de la surface d'application (11).

3. Agencement d'essieu selon l'une des revendications 1 et 2, **caractérisé en ce que** la monture de ressort à lame (4) comprend un premier composant (5) et un second composant (6), et **en ce que** le premier composant (5) et le second composant (6) coopèrent à la manière de colliers.

4. Agencement d'essieu selon la revendication 3, **caractérisé en ce que** le premier composant (5) comporte une ouverture de montage cylindrique (9) dans laquelle la surface d'application (11) est mise en place de manière rotative.

5. Agencement d'essieu selon l'une des revendications 3 et 4, **caractérisé en ce que** le premier composant (5) comprend deux branches (7) qui coiffent le ressort à lame (3), les branches (7) étant reliées l'une à l'autre via une barre transversale (8).

6. Agencement d'essieu selon l'une des revendications 3 à 5, **caractérisé en ce qu'**une couche intermédiaire (14) est agencée entre le premier composant (5) et le ressort à lame (3), la couche intermédiaire (14) comportant une ouverture d'ajustement et étant reliée au ressort à lame (3) dans une position fixée.

7. Agencement d'essieu selon la revendication 6, **caractérisé en ce que** l'ouverture d'ajustement est un trou oblong (13) et la surface d'ajustement (12) est agencée en rotation dans l'ouverture d'ajustement.

8. Agencement d'essieu selon l'une des revendications 2 à 7, **caractérisé en ce que** la vis excentrique (10) comprend une surface d'application pour clé (15) destinée à recevoir un outil de réglage, ladite surface d'application pour clé (15) étant de préférence réalisée sous forme de carré, et en particulier sous forme d'hexagone.

9. Agencement d'essieu selon l'une des revendications 2 à 8, **caractérisé en ce qu'**en tournant la vis excentrique (10) il est possible d'exécuter un mouvement relatif (R) entre le corps d'essieu (2) et le ressort à lame (3).

10. Agencement d'essieu selon la revendication 9, **caractérisé en ce que** la voie est réglable grâce au mouvement relatif (R).

11. Agencement d'essieu selon l'une des revendications 4 à 10, **caractérisé en ce que** le second composant (6) est couplé au corps d'essieu (2) dans une position fixée.
